# EUROPÄISCHE PATENTSCHRIFT

(11) **EP 1 089 577 B1**
(45) Veröffentlichungstag und Bekanntmachung des Hinweises auf die Patenterteilung: **28.04.2004**
(21) Anmeldenummer: 00120665.5
(22) Anmeldetag: 21.09.2000
(51) Int. Cl.: H04Q 7/30

(54) **Verfahren zum Betreiben einer schnurlosen Telekommunikationseinrichtung**
Method for operating a cordless telecommunication installation
Procédé d'exploitation d'une installation de télécommunication sans fil

(30) Priorität: 28.09.1999 DE 19946489
(43) Veröffentlichungstag der Anmeldung: 04.04.2001
(73) Patentinhaber: SIEMENS AKTIENGESELLSCHAFT, 80333 München (DE)
(72) Erfinder: Beckers, Michael, 46395 Bocholt (DE)

(56) Entgegenhaltungen:
- EP-A- 0 645 921
- PATENT ABSTRACTS OF JAPAN vol. 1999, no. 10, 31. August 1999 (1999-08-31) & JP 11 146452 A (NEC ENG LTD), 28. Mai 1999 (1999-05-28)

## Beschreibung

Die Erfindung betrifft ein Verfahren zum Betreiben einer schnurlosen, eine Basisstation und zumindest ein Mobilteil umfassenden Telekommunikationseinrichtung gemäß den Oberbegriffen der Patentansprüche 1, 2 und 3.

Schnurlose Telekommunikationseinrichtungen, die eine Basisstation und ein Mobilteil umfassen, sollen für den Benutzer ausreichend Schutz gegen Mißbrauch bieten. Das heißt, es soll verhindert werden, daß ein nicht zur Basisstation gehörendes Mobilteil an der Basisstation angemeldet werden kann, wodurch für Dritte eine unberechtigte Benutzung des Telekommunikationsanschlusses ermöglicht wäre. Basisstationen ohne eigenes Bedienfeld sind in vielen Fällen nach einem Reset oder einem Aus- und Wiedereinschalten der Basisstation für eine vorgegebene Zeit anmeldebereit. Das heißt, während dieser Zeit kann ein Mobilteil an der Basis angemeldet werden. Hat ein Unberechtigter Dritter nun Zugang zu der Stromversorgung eines Hauses beziehungsweise einer Wohnung, so kann er eine ihm ansonsten unzugängliche Basisstation der Telekommunikationseinrichtung anmeldebereit machen, indem er kurzzeitig die Stromversorgung unterbricht und wieder aktiviert, wodurch er die Basis - wie vorstehend erwähnt - anmeldebereit machen kann.

Aus der EP 0 645 921 A1 ist eine schnurlose Telekommunikationseinrichtung, bestehend aus einer Basisstation und einem für den schnurlosen Betrieb an der Basisstation berechtigten Mobilteil, bekannt, bei der die Basisstation vor der Aufnahme des Betriebs in einem Zustand ohne Energieversorgung ist und bei der das vor der Aufnahme des Betriebs an der Basisstation als berechtigt angemeldete Mobilteil sende- und empfangsbereit ist.

Es sind auch Telekommunikationseinrichtungen bekannt, bei denen nach der Installation eine Anmeldeprozedur durchzuführen ist, bei der beispielsweise am Mobilteil ein voreingestellter Pin-Code eingegeben werden muß, um das Mobilteil an der Basisstation anzumelden. Um die Anmeldeprozedur für den Benutzer zu erleichtern, ist dieser Pin-Code in vielen Fällen an einer Systemkomponente der Telekommunikationseinrichtung ersichtlich. Eine Änderung dieses Pin-Codes durch den Benutzer ist zwar möglich und wünschenswert, wird in den seltensten Fällen jedoch vom Nutzer ausgeführt. Somit ist auch bei diesen Telekommunikationseinrichtungen eine unberechtigte Nutzung möglich, wenn der unberechtigte Dritte nicht nur Zugang zur Stromversorgung hat, sondern ihm zusätzlich noch der Pin-Code bekannt ist. Bei bekannten Telekommunikationseinrichtungen besteht also für den Benutzer in vielen Fällen keine ausreichende Sicherheit, um einen gesicherten Betrieb der schnurlosen Telekommunikationseinrichtung zu ermöglichen. Gesicherter Betrieb heißt, daß zumindest ein berechtigtes (angemeldetes) Mobilteil an der entsprechenden Basisstation verhindert, daß ein unberechtigtes Mobilteil angemeldet werden kann beziehungsweise ein unberechtigt angemeldetes Mobilteil wieder abmeldet.

Es ist daher Aufgabe der Erfindung, ein Verfahren zum Betreiben einer schnurlosen Telekommunikationseinrichtung anzugeben, das diesen Nachteil nicht aufweist und demzufolge einen gesicherten Betrieb ermöglicht.

Gelöst wird diese Aufgabe ausgehend von dem im Oberbegriff des Patentanspruches 1 definierten Verfahren zum Betreiben einer Telekommunikationseinrichtung durch die im Kennzeichen des Patentanspruches 1 angegebenen Merkmale.

Die schnurlose, eine Basisstation und ein Mobilteil umfassende Telekommunikationseinrichtung befindet sich in einem Zustand, bei dem die Basisstation ohne Energieversorgung vorliegt, jedoch vor dem Zustand ohne Energieversorgung ein an der Basisstation angemeldetes Mobilteil vorlag, das in diesem Fall als berechtigtes Mobilteil angesehen wird. Es ist vorgesehen, daß im Zustand ohne Energieversorgung der Basisstation das Mobilteil vor der Aufnahme des Betriebs sende- und empfangsbereit ist. Beim erfindungsgemäßen Verfahren ist ferner vorgesehen, daß nach der Aufnahme der Energieversorgung für die Basisstation diese ihre Anmeldebereitschaft zum Anmelden eines Mobilteils signalisiert. Insbesondere zeichnet sich dieses Verfahren dadurch aus, daß das berechtigte, also sende- und empfangsbereite und vor der Aufnahme des Betriebs angemeldete Mobilteil die Basisstation veranlaßt, die Anmeldebereitschaft vorzeitig zu beenden. Somit wird sicher verhindert, daß ein nicht zur Basisstation gehörendes Mobilteil die Anmeldeprozedur durchlaufen kann und somit als angemeldetes Mobilteil akzeptiert werden würde. Das unberechtigte Mobilteil hat also überhaupt nicht die Möglichkeit, sich an der fremden Basisstation anzumelden.

Diese Aufgabe wird auch mit einem ausgehend von dem im Oberbegriff des Patentanspruches 2 definierten Verfahren durch die im Kennzeichen des Patentanspruches 2 angegebenen Merkmale gelöst.

Die schnurlose, eine Basisstation und ein Mobilteil umfassende Telekommunikationseinrichtung befindet sich in einem Zustand, bei dem die Basisstation ohne Energieversorgung vorliegt, jedoch vor dem Zustand ohne Energieversorgung ein an der Basisstation angemeldetes Mobilteil vorlag, das in diesem Fall als berechtigtes Mobilteil angesehen wird. Es ist vorgesehen, daß im Zustand ohne Energieversorgung der Basisstation das Mobilteil vor der Aufnahme des Betriebs sende- und empfangsbereit ist. Insbesondere zeichnet sich das Verfahren dadurch aus, daß nach der Aufnahme der Energieversorgung für die Basisstation und deren Signalisierung der Anmeldebereitschaft zum Anmelden eines Mobilteils die darauffolgende Anmeldung eines weiteren, unberechtigten Mobilteils an der Basisstation durch das berechtigte Mobilteil aufgehoben wird.

Mit anderen Worten, das berechtigte Mobilteil, das also vor der Aufnahme der Energieversorgung an der Basisstation berechtigterweise angemeldet war, veranlaßt die Annullierung der Anmeldung des weiteren, unberechtigten Mobilteils. Somit wird auch bei dieser alternativen Lösung sicher verhindert, daß unberechtigte Dritte Zugang auf den Telekommunikationsanschluß haben, an dem die Basisstation mit zugehörigem, berechtigtem Mobilteil angeschlossen ist.

Eine weitere alternative Lösung der Aufgabe ist ausgehend von dem im Oberbegriff des Patentanspruches 3 definierten Verfahren durch die Kennzeichen des Patentanspruches 3 angegebenen Merkmale möglich.

Die schnurlose, eine Basisstation und ein Mobilteil umfassende Telekommunikationseinrichtung befindet sich in einem Zustand, bei dem die Basisstation ohne Energieversorgung vorliegt, jedoch vor dem Zustand ohne Energieversorgung ein an der Basisstation angemeldetes Mobilteil vorlag, das in diesem Fall als berechtigtes Mobilteil angesehen wird. Es ist vorgesehen, daß im Zustand ohne Energieversorgung der Basisstation das Mobilteil vor der Aufnahme des Betriebs sende- und empfangsbereit ist. Es ist weiterhin vorgesehen, daß nach der Aufnahme der Energieversorgung für die Basisstation diese ab einem ersten Zeitpunkt eine sogenannte Vorphase signalisiert, um einem anzumeldenden Mobilteil anzuzeigen, daß ab einem zweiten Zeitpunkt, der dem ersten Zeitpunkt folgt, Anmeldebereitschaft hergestellt wird. Erfindungsgemäß zeichnet sich das Verfahren dadurch aus, daß das berechtigte, also bereits vor der Aufnahme der Energieversorgung angemeldete Mobilteil verhindert, daß die Anmeldebereitschaft überhaupt hergestellt wird. Das heißt, daß das berechtigte Mobilteil schon während der Vorphase der Basisstation mitteilt, daß ein berechtigtes Mobilteil vorliegt, also eine Anmeldebereitschaft überhaupt nicht hergestellt werden muß. Mithin wird auch mit diesem Verfahren verhindert, daß unberechtigte Mobilteile an dieser Basisstation angemeldet werden können.

Bei einem Ausführungsbeispiel ist vorgesehen, daß die Signalisierung der Anmeldebereitschaft der Basisstation über eine zwischen Basisstation und Mobilteil herstellbare unidirektionale Funkstrecke erfolgt. Über diese auch als Dummy-Bearer bezeichnete Funkstrecke wird also die Anmeldebereitschaft der anmeldebereiten Basisstation signalisiert.

Nach einer Weiterbildung der Erfindung ist vorgesehen, daß die Signalisierung der Vorphase über die unidirektionale Funkstrecke erfolgt, die - wie vorstehend erwähnt - zwischen Basisstation und Mobilteil aufbaubar ist.

Beim erfindungsgemäßen Verfahren nach Anspruch 1 ist in einer Weiterbildung der Erfindung vorgesehen, daß das Mobilteil über eine bidirektionale Funkstrecke die Basisstation veranlaßt, die Anmeldebereitschaft vorzeitig zu beenden. Beim erfindungsgemäßen Verfahren nach Anspruch 2 ist vorgesehen, daß das Mobilteil über die bidirektionale Schnittstelle die Basisstation veranlaßt, die Anmeldung des unberechtigten Mobilteils zu annullieren. Beim Verfahren nach Anspruch 3 ist vorgesehen, daß das Mobilteil über die bidirektionale Schnittstelle, die auch als Traffic-Bearer bezeichnet wird, die Basisstation veranlaßt, die Anmeldebereitschaft nicht herzustellen, also nach Beendigung der Vorphase eine Anmeldebereitschaft überhaupt nicht zu signalisieren.

Bevorzugt wird ein Ausführungsbeispiel, bei dem die Anmeldebereitschaft der Basisstation während einem zweiten Zeitraum hergestellt wird. Das heißt, bei der Aufnahme der Energieversorgung für die Basisstation bleibt diese nicht so lange anmeldebereit bis ein Mobilteil angemeldet ist, vielmehr ist nach einem vorgebbaren Zeitraum vorgesehen, daß die Anmeldebereitschaft nach einer bestimmten Zeit beendet wird, auch wenn sich kein Mobilteil angemeldet hat.

Bei der erfindungsgemäßen Lösung nach Anspruch 3 ist vorgesehen, daß die Vorphase während eines zweiten Zeitraums vorliegt, um dem berechtigten Mobilteil genügend Zeit zu geben, um der Basisstation mitzuteilen, daß die Anmeldebereitschaft überhaupt nicht hergestellt werden soll.

Bei einem bevorzugten Ausführungsbeispiel ist vorgesehen, daß die Basisstation das weitere, unberechtigterweise angemeldete Mobilteil veranlaßt, während der Anmeldung ausgetauschte Anmeldedaten zu löschen, sofern die Anmeldung des unberechtigten Mobilteils zwar akzeptiert wurde, das berechtigte Mobilteil die Anmeldung jedoch nachträglich annulliert.

Weitere Ausgestaltungen ergeben sich aus den Unteransprüchen.

Die Erfindung wird nachfolgend anhand von Ausführungsbeispielen mit Bezug auf die Zeichnung näher erläutert. Es zeigen:
- Figur 1: ein Flußdiagramm eines ersten Ausführungsbeispiels eines Verfahrens zur Aufnahme des gesicherten Betriebs einer schnurlosen Telekommunikationseinrichtung,
- Figur 2: ein Flußdiagramm eines zweiten Ausführungsbeispiels eines Verfahrens zur Aufnahme des gesicherten Betriebs der schnurlosen Telekommunikationseinrichtung und
- Figur 3: ein Flußdiagramm eines dritten Ausführungsbeispiels eines Verfahrens zur Aufnahme des gesicherten Betriebs.

Im folgenden wird davon ausgegangen, daß die Telekommunikationseinrichtung eine Basisstation ohne Bedienfeld umfaßt. Selbstverständlich kann auch vorgesehen sein, daß die Basisstation mit einem Bedienfeld ausgestattet ist.

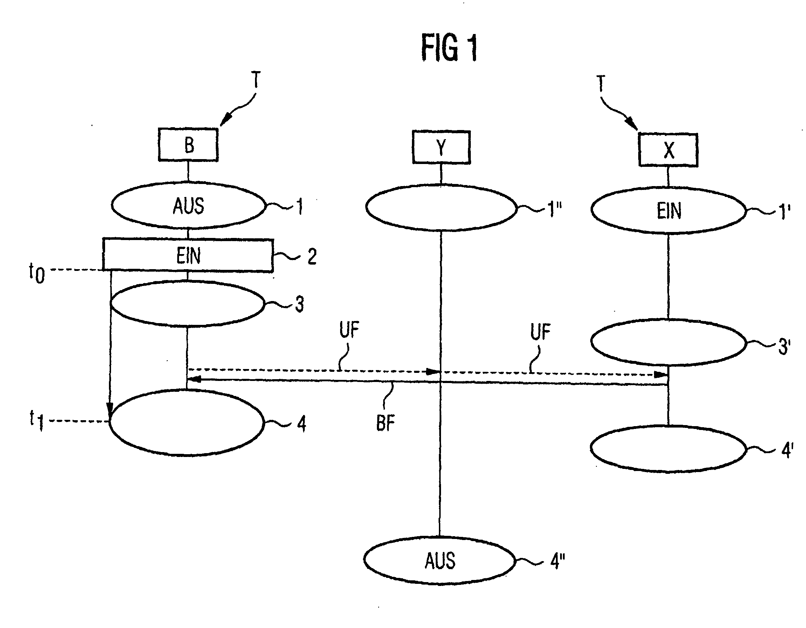

Für die Beschreibung der Verfahren wird ferner davon ausgegangen, daß vor der Aufnahme der Energieversorgung der Basisstation ein an dieser Basisstation angemeldetes Mobilteil vorlag, das während der Phase ohne Energieversorgung der Basisstation nicht deaktiviert wurde, also sende- und empfangsbereit vorliegt. Dieses berechtigte Mobilteil ist in den zu beschreibenden Figuren 1 bis 3 mit dem Bezugszeichen X versehen und bildet mit der in den Figuren 1 bis 3 mit dem Bezugszeichen B gekennzeichneten Basisstation die schnurlose Telekommunikationseinrichtung T.

Im Flußdiagramm nach Figur 1 ist die ausgeschaltete Basisstation B von einer Energieversorgung getrennt. Es kann auch vorgesehen sein, daß die Energieversorgung nicht aktiv ist. Dies ist in Figur 1 mit dem Verfahrensschritt 1 verdeutlicht. Das der Basisstation B zugeordnete Mobilteil X hingegen liegt eingeschaltet vor, das heißt, es ist sende- und empfangsbereit. Dieser Zustand ist im Flußdiagramm in Figur 1 mit dem Bezugszeichen 1' versehen. Das nicht zur Basisstation B gehörende Mobilteil Y, das also unberechtigterweise an der Basisstation B angemeldet werden soll, ist in einem Verfahrensschritt 1'' in einem Betriebszustand, in dem es eine anmeldebereite Basis sucht.

Durch Einschalten (Verfahrensschritt 2) beziehungsweise Aufnahme der Energieversorgung für die Basisstation B signalisiert die Basisstation B über eine unidirektionale Funkstrekke UF ihre Anmeldebereitschaft. Das Signalisieren der Anmeldebereitschaft ist im Flußdiagramm durch den Verfahrensschritt 3 wiedergegeben. Daß eine anmeldebereite Basisstation B vorliegt, wird somit über die unidirektionale Funkstrecke UF sowohl am Mobilteil X als auch am Mobilteil Y empfangen. Das Mobilteil X, das bereits vor der Deaktivierung der Energieversorgung an der Basisstation B angemeldet war, erkennt jedoch, daß es zur Basisstation B synchron ist (Verfahrensschritt 3') und zeigt über eine bidirektionale Funkstrecke BF der Basisstation B an, daß bereits ein angemeldetes Mobilteil, in diesem Fall das Mobilteil X, vorliegt. Dadurch wird in einem Verfahrensschritt 4 die Anmeldebereitschaft der Basisstation B beendet, so daß das unberechtigte Mobilteil Y überhaupt keine Möglichkeit erhält, sich an der Basisstation B anzumelden. Das eben beschriebene Ausführungsbeispiel des Verfahrens zeichnet sich also insbesondere dadurch aus, daß das berechtigte Mobilteil X die Basisstation B veranlaßt, ihre Anmeldebereitschaft vorzeitig zu beenden. Dies ist in Figur 1 durch einen Zeitraum t₀ bis t₁ für das Aufrechterhalten der Anmeldebereitschaft gekennzeichnet. Nachdem die Basis wieder mit Energie versorgt wird und das berechtigte Mobilteil X ihr eindeutig zugeordnet ist, kann das Mobilteil X in einem Verfahrensschritt 4' eingeschaltet bleiben oder deaktiviert werden. Das unberechtigte Mobilteil Y hingegen bricht die Anmeldeprozedur in einem Verfahrensschritt 4'' ab. Dies kann beispielsweise automatisch oder durch einen durch einen Benutzer eingegebenen Abbruch vorgenommen werden.

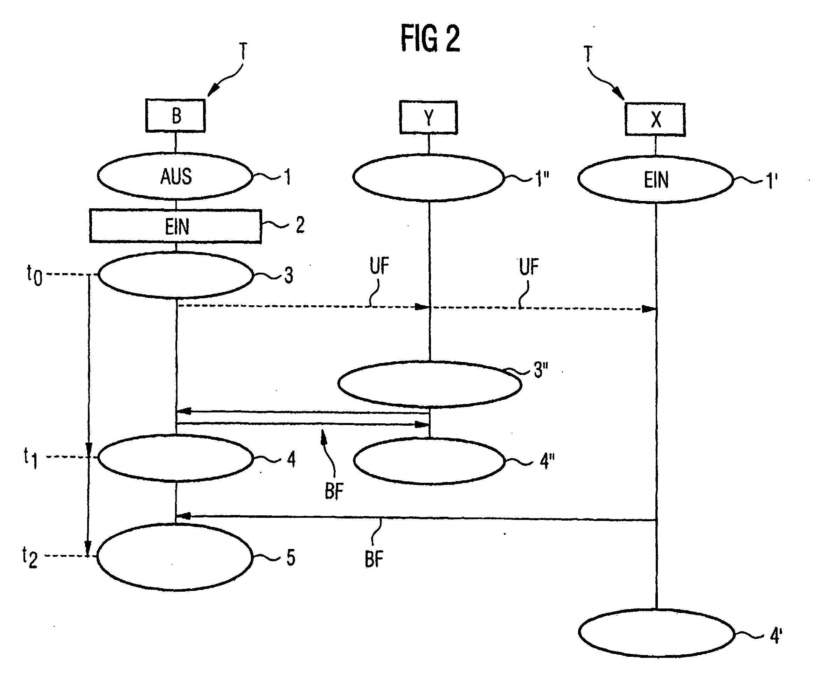

Figur 2 zeigt ein zweites Ausführungsbeispiel des Verfahrens zum Betreiben einer Telekommunikationseinrichtung T anhand eines Flußdiagramms. Gleiche beziehungsweise gleichwirkende Teile sind in Figur 2 mit den selben Bezugszeichen versehen. Auf deren nochmalige Beschreibung wird daher verzichtet. Die eingeschaltete Basisstation B signalisiert über die unidirektionale Funkstrecke UF, daß sie anmeldebereit ist. Das berechtigte Mobilteil X liegt - wie im Ausführungsbeispiel nach Figur 1 - eingeschaltet vor. Das unberechtigte Mobilteil Y sucht im Verfahrensschritt 1'' nach einer Basisstation, die Anmeldebereitschaft signalisiert. Über die unidirektionale Funkstrecke UF erkennt das Mobilteil Y, daß die Basisstation B anmeldebereit ist. Nachdem das Mobilteil Y synchron zur anmeldebereiten Basisstation B ist (Verfahrensschritt 3''), werden über die bidirektionale Funkstrecke BF Anmeldedaten zwischen der Basisstation B und dem unberechtigten Mobilteil Y ausgetauscht. Im Verfahrensschritt 4 beendet die Basisstation B ihre Anmeldebereitschaft und hat zunächst das unberechtigte Mobilteil Y akzeptiert, das daraufhin in einem Verfahrensschritt 4'' in den kurzzeitigen gesicherten Betrieb übergeht. Das berechtigte Mobilteil X übermittelt über die bidirektionale Funkstrecke BF an die Basisstation B, daß bereits vor dem angemeldeten Mobilteil Y das berechtigte Mobilteil X angemeldet war, woraufhin die Basisstation die zwischen ihr und dem Mobilteil Y ausgetauschten Anmeldedaten für ungültig erklärt (Verfahrensschritt 5) und somit die Anmeldung des Mobilteils Y annulliert. Vorzugsweise ist vorgesehen, daß die Basisstation B lediglich während eines Zeitraums t₁ bis t₂ Informationen vom Mobilteil X empfangen kann, um die Anmeldung des unberechtigten Mobilteils Y zu annullieren. Wurde die Anmeldung für das Mobilteil Y annulliert, geht die Basisstation B in den Normalbetrieb über. Das heißt, lediglich das berechtigte Mobilteil X hat Zugriff auf die Basisstation B.

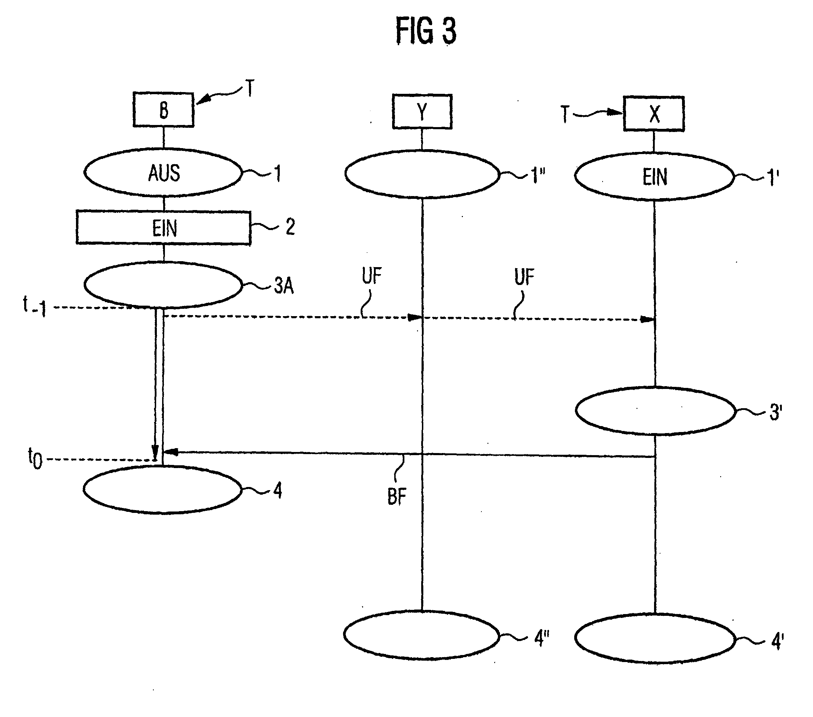

Aus dem Flußdiagramm nach Figur 3 geht ein drittes Ausführungsbeispiel des Verfahrens zum Betreiben einer schnurlosen Telekommunikationseinrichtung T hervor. Gleiche beziehungsweise gleichwirkende Teile wie in Figuren 1 bis 2 sind in Figur 3 mit den selben Bezugszeichen versehen. Auf deren Beschreibung wird daher verwiesen. Nach der Aufnahme der Energieversorgung für die Basisstation B, also das im Verfahrensschritt 2 vorgesehene Einschalten der Basisstation B löst während einem Zeitpunkt t₋₁ bis t₀ eine Vorphase (Verfahrensschritt 3A) aus, bei der die Basisstation B über die unidirektionale Funkstrecke UF signalisiert, daß sie ab dem Zeitpunkt t₀ anmeldebereit sein wird, wie dies beispielsweise in den Figuren 1 und 2 durch den Verfahrensschritt 3 wiedergegeben ist. Daß die Basisstation B sich in dieser Vorphase befindet, wird über die unidirektionale Schnittstelle UF sowohl vom berechtigten Mobilteil X als auch von dem Mobilteil Y empfangen, das auf der Suche (Verfahrensschritt 1'') nach einer anmeldebereiten Basis ist. Da das berechtigte Mobilteil X bereits synchron (Verfahrensschritt 3') zur Basisstation B ist, übermittelt es über die bidirektionale Funkstrecke BF an die Basisstation B, daß bereits ein angemeldetes Mobilteil X vorliegt. Die Basisstation B geht deshalb sofort in den Verfahrensschritt 4 (Normalbetrieb) über. Der Verfahrensschritt 3, also die Signalisierung der Anmeldebereitschaft der Basisstation B, wird also übersprungen beziehungsweise überhaupt nicht durchgeführt. Somit findet das unberechtigte Mobilteil Y keine anmeldebereite Basis. Ein Anmelden dieses unberechtigten Mobilteils Y auf die Basisstation B kann somit nicht erfolgen.

Es zeigt sich also, daß mit den erfindungsgemäßen Verfahren verhindert wird, daß ein nicht berechtigtes Mobilteil Y an einer Basisstation B angemeldet werden kann, die bereits mit einem berechtigten Mobilteil X ein Paar, also eine Telekommunikationseinrichtung T bildet. Eines der Verfahren zeichnet sich also dadurch aus, daß das Mobilteil X die Basisstation B veranlaßt, die Anmeldebereitschaft vorzeitig zu beenden. Bei dem zweiten Ausführungsbeispiel ist vorgesehen, daß das berechtigte Mobilteil X die Anmeldung des unberechtigten Mobilteils annulliert. Beim dritten Ausführungsbeispiel zeichnet sich das Verfahren dadurch aus, daß während einer Vorphase ermittelt wird, ob ein angemeldetes Mobilteil X vorliegt. Sofern dies gegeben ist, wird die Anmeldebereitschaft der Basisstation überhaupt nicht aktiviert, so daß ein unberechtigtes Mobilteil Y überhaupt nicht angemeldet werden kann beziehungsweise überhaupt keine anmeldebereite Basis findet.

Um bei den erfindungsgemäßen Verfahren ein Anmelden eines zweiten berechtigten Mobilteils zu ermöglichen, kann vorgesehen sein, daß das erste berechtigte Mobilteil X beim Einschalten der Basisstation B ausgeschaltet ist. Es wird wieder eingeschaltet, wenn die Anmeldung des zweiten berechtigten Mobilteils beendet ist. In den Ausführungsbeispielen ist dies der Zeitpunkt t₁ beziehungsweise t₂.

## Patentansprüche

1. Verfahren zum Betreiben einer schnurlosen, eine Basisstation (B) und zumindest ein berechtigtes Mobilteil (X) umfassenden Telekommunikationseinrichtung, wobei die Basisstation (B) vor der Aufnahme des Betriebs in einem Zustand ohne Energieversorgung ist und das vor der Aufnahme des Betriebs angemeldete berechtigte Mobilteil (X) sende- und empfangsbereit ist, **gekennzeichnet durch**:
- Aufnahme der Energieversorgung für die Basisstation (B),
- Signalisierung der Anmeldebereitschaft (3) der Basisstation (B) zum Anmelden eines weiteren Mobilteils (Y) und
- das berechtigte Mobilteil (X) veranlaßt die Basisstation (B) die Anmeldebereitschaft (3) vorzeitig zu beenden (4).

2. Verfahren zum Betreiben einer schnurlosen, eine Basisstation (B) und zumindest ein Mobilteil (X) umfassenden Telekommunikationseinrichtung, wobei die Basisstation (B) vor der Aufnahme des Betriebs in einem Zustand ohne Energieversorgung ist und das vor der Aufnahme des Betriebs angemeldete berechtigte Mobilteil (X) sende- und empfangsbereit ist, **gekennzeichnet durch**:
- Aufnahme der Energieversorgung für die Basisstation (B),
- Signalisierung der Anmeldebereitschaft (3) der Basisstation (B) zum Anmelden eines weiteren Mobilteils (Y),
- Anmeldung des weiteren Mobilteils (Y) an die Basisstation (B) und
- das berechtigte Mobilteil (X) veranlaßt die Basisstation (B) zur Annullierung der Anmeldung des weiteren Mobilteils (Y).

3. Verfahren zum Betreiben einer schnurlosen, eine Basisstation (B) und zumindest ein berechtigtes Mobilteil (X) umfassenden Telekommunikationseinrichtung, wobei die Basisstation (B) vor der Aufnahme des Betriebs in einem Zustand ohne Energieversorgung ist und das vor der Aufnahme des Betriebs angemeldete berechtigte Mobilteil (X) sende- und empfangsbereit ist, **gekennzeichnet durch**:
- Aufnahme der Energieversorgung für die Basisstation (B),
- Signalisierung einer Vorphase (3A) **durch** die Basisstation (B) ab einem ersten Zeitpunkt (t₋₁), daß Anmeldebereitschaft ab einem zweiten Zeitpunkt (t₀), der dem ersten Zeitpunkt (t₋₁) folgt, hergestellt wird und
- das berechtigte Mobilteil (X) verhindert die Herstellung der Anmeldebereitschaft (3) der Basisstation (B).

4. Verfahren nach einem der vorhergehenden Ansprüche, **dadurch gekennzeichnet, daß** die Signalisierung der Anmeldebereitschaft über eine unidirektionale Funkstrecke (UF) zwischen Basisstation (B) und Mobilteil (X, Y) erfolgt.

5. Verfahren nach Anspruch 3, **dadurch gekennzeichnet, daß** die Signalisierung der Vorphase (3A) über eine unidirektionale Funkstrecke (UF) zwischen Basisstation (B) und Mobilteil (X, Y) erfolgt.

6. Verfahren nach Anspruch 1, **dadurch gekennzeichnet, daß** das Mobilteil (X) über eine bidirektionale Funkstrecke (BF) die Basisstation (B) veranlaßt, die Anmeldebereitschaft vorzeitig zu beenden.

7. Verfahren nach Anspruch 2, **dadurch gekennzeichnet, daß** das Mobilteil (X) über eine bidirektionale Funkstrecke (BF) die Basisstation (B) veranlaßt, die Anmeldung zu annullieren.

8. Verfahren nach Anspruch 3, **dadurch gekennzeichnet, daß** das Mobilteil (X) über eine bidirektionale Funkstrecke (BF) die Basisstation (B) veranlaßt, die Anmeldebereitschaft nicht herzustellen.

9. Verfahren nach einem der vorhergehenden Ansprüche, **dadurch gekennzeichnet, daß** die Anmeldebereitschaft für einen zweiten Zeitraum (t₀ bis t₁) hergestellt wird.

10. Verfahren nach einem der Ansprüche 3 und 5, **dadurch gekennzeichnet, daß** die Vorphase für einen ersten Zeitraum (t₋₁ bis t₀) vorliegt.

11. Verfahren nach Anspruch 2, **dadurch gekennzeichnet, daß** die Basisstation (B) das weitere Mobilteil (Y) veranlaßt, während der Anmeldung ausgetauschte Anmeldedaten zu löschen.

## Claims

1. Method for operating a cordless telecommunications facility incorporating a base station (B) and at least one authorized mobile part (X), where the base station (B) is in a condition without energy supply prior to the commencement of operation and the authorized mobile part (X) registered prior to the commencement of operation is ready to transmit and receive, **characterized by**:
- commencement of the energy supply for the base station (B),
- signaling of the readiness for registration (3) of the base station (B) for the purposes of registering a further mobile part (Y) and
- the authorized mobile part (X) causes the base station (B) to prematurely terminate (4) the readiness for registration(3).

2. Method for operating a cordless telecommunications facility incorporating a base station (B) and at least one mobile part (X), where the base station (B) is in a condition without energy supply prior to the commencement of operation and the authorized mobile part (X) registered prior to the commencement of operation is ready to transmit and receive, **characterized by**:
- commencement of the energy supply for the base station (B),
- signaling of the readiness for registration (3) of the base station (B) for the purposes of registering a further mobile part (Y),
- registration of the further mobile part (Y) to the base station (B) and
- the authorized mobile part (X) causes the base station (B) to cancel the registration of the further mobile part (Y).

3. Method for operating a cordless telecommunications facility incorporating a base station (B) and at least one authorized mobile part (X), where the base station (B) is in a condition without energy supply prior to the commencement of operation and the authorized mobile part (X) registered prior to the commencement of operation is ready to transmit and receive, **characterized by**:
- commencement of the energy supply for the base station (B),
- signaling of a preliminary phase (3A) by the base station (B) with effect from a first time point (t₋₁) to the effect that readiness for registration is to be established with effect from a second time point (t₀) which follows the first time point (t₋₁) and
- the authorized mobile part (X) prevents the establishement of the readiness for registration (3) of the base station (B).

4. Method as claimed in one of the foregoing claims, **characterized by** the fact that the readiness for registration is signaled via a unidirectional radio link (UF) between the base station (B) and the mobile part (X, Y).

5. Method as claimed in Claim 3, **characterized by** the fact that the signaling of the preliminary phase (3A) takes place via a unidirectional radio link (UF) between the base station (B) and the mobile part (X, Y).

6. Method as claimed in Claim 1, **characterized by** the fact that the mobile part (X) causes the base station (B) to prematurely terminate the readiness for registration via a bi-directional radio link (BF).

7. Method as claimed in Claim 2, **characterized by** the fact that the mobile part (X) causes the base station (B) to cancel the registration via a bi-directional radio link (BF).

8. Method as claimed in Claim 3, **characterized by** the fact that the mobile part (X) causes the base station (B) not to establish the readiness for registration via a bi-directional radio link (BF).

9. Method as claimed in one of the foregoing claims, **characterized by** the fact that the readiness for registration is established for a second period (t₀ to t₁).

10. Method as claimed in one of Claims 3 and 5, **characterized by** the fact that the preliminary phase is present for a first period (t₋₁ to t₀).

11. Method as claimed in Claim 2, **characterized by** the fact that base station (B) causes the further mobile part (Y) to delete registration data exchanged during the registration.

## Revendications

1. Procédé d'exploitation d'une installation de télécommunication sans fil qui comprend un poste de base (B) et au moins une partie mobile autorisée (X), le poste de base (B) se trouvant dans un état sans alimentation en énergie avant le commencement de l'exploitation et la partie mobile autorisée (X) déclarée étant prête à émettre et à recevoir avant le commencement de l'exploitation, **caractérisé par**:
- le commencement de l'alimentation en énergie par le poste de base (B),
- la signalisation de la disposition à recevoir la déclaration (3) du poste de base (B), pour la déclaration d'une autre partie mobile (Y) et
- la partie mobile autorisée (X) autorise le poste de base (B) à interrompre (4) prématurément la disposition (3) à recevoir la déclaration.

2. Procédé d'exploitation d'une installation de télécommunication sans fil qui comprend un poste de base (B) et au moins une partie mobile (X), le poste de base (B) se trouvant dans un état non alimenté en énergie avant le commencement de l'exploitation et la partie mobile autorisée (X) déclarée étant prête à émettre et recevoir avant le commencement de l'exploitation, **caractérisé par**:
- le commencement de l'alimentation en énergie par le poste de base (B),
- la signalisation de la disposition à recevoir la déclaration du poste de base (B) pour la déclaration d'une autre partie mobile (Y) et
- la déclaration de l'autre partie mobile (Y) au poste de base (B) et
- la partie mobile autorisée (X) autorise le poste de base (B) à annuler la déclaration de l'autre partie mobile (Y).

3. Procédé d'exploitation d'une installation de télécommunication sans fil qui comprend un poste de base (B) et au moins une partie mobile (X), le poste de base (B) se trouvant dans un état non alimenté en énergie avant le commencement de l'exploitation et la partie mobile autorisée (X) déclarée étant prête à émettre et à recevoir avant le commencement de l'exploitation, **caractérisé par**:
- le commencement de l'alimentation en énergie par le poste de base (B),
- la signalisation par le poste de base (B) d'une phase préalable (3A) à partir d'un premier instant (t-1), qui indique une disposition à recevoir la déclaration à partir d'un deuxième instant (t0) qui suit le premier instant (t-1) et,
- l'interdiction donnée par la partie mobile autorisée (X) au poste de base (B) à établir la disposition à recevoir la déclaration (3).

4. Procédé selon l'une des revendications précédentes, **caractérisé en ce que** la signalisation de la disposition à recevoir la déclaration s'effectue par un parcours radio unidirectionnel (UF) entre le poste de base (B) et la partie mobile (X, Y).

5. Procédé selon la revendication 3, **caractérisé en ce que** la signalisation de la phase préalable (3A) s'effectue par un parcours radio unidirectionnel (UF) entre le poste de base (B) et la partie mobile (X, Y).

6. Procédé selon la revendication 1, **caractérisé en ce que** par un parcours radio bidirectionnel (BF), la partie mobile (X) permet au poste de base (B) d'interrompre prématurément son état prêt à recevoir une identification.

7. Procédé selon la revendication 2, **caractérisé en ce que** par un parcours radio bidirectionnel (BF), la partie mobile (X) permet au poste de base (B) d'annuler l'identification.

8. Procédé selon la revendication 3, **caractérisé en ce que** par un parcours radio bidirectionnel (BF), la partie mobile (X) permet au poste de base (B) de ne pas établir la disposition à recevoir la déclaration.

9. Procédé selon l'une des revendications précédentes, **caractérisé en ce que** la disposition à recevoir la déclaration est établie pendant un deuxième laps de temps (t₀ à t₁).

10. Procédé selon l'une des revendications 3 et 5, **caractérisé en ce que** la phase préalable s'étend pendant une premier laps de temps (t₁ à t₀).

11. Procédé selon la revendication 2, **caractérisé en ce que** le poste de base (B) permet à l'autre partie mobile (Y) d'effacer les données d'identification échangées pendant l'identification.
